# EUROPEAN PATENT SPECIFICATION

(11) **EP 4 061 858 B1**
(45) Date of publication and mention of the grant of the patent: **20.12.2023**
(21) Application number: 20801265.8
(22) Date of filing: 05.11.2020
(51) Int. Cl.: C08F 10/02, C08F 4/651

(54) **PROCESS FOR THE PREPARATION OF A CATALYST COMPONENT AND COMPONENTS THEREFROM OBTAINED**
VERFAHREN ZUR HERSTELLUNG EINER KATALYSATORKOMPONENTE UND DARAUS HERGESTELLTE KOMPONENTEN
PROCÉDÉ DE PRÉPARATION D'UN COMPOSANT DE CATALYSEUR ET COMPOSANTS OBTENUS DE LÀ

(30) Priority: 20.11.2019 EP 19210236
(43) Date of publication of application: 28.09.2022
(73) Proprietor: Basell Poliolefine Italia S.r.l., 20121 Milano (IT)
(72) Inventor: BRITA, Diego, 44122 Ferrara (IT); COLLINA, Gianni, 44122 Ferrara (IT); EVANGELISTI, Daniele, 44122 Ferrara (IT); GADDI, Benedetta, 44122 Ferrara (IT); GESSI, Piero, 44122 Ferrara (IT); MORINI, Giampiero, 44122 Ferrara (IT); SOFFRITTI, Silvia, 44122 Ferrrara (IT); VINCENZI, Paolo, 44122 Ferrara (IT)
(74) Representative: LyondellBasell
(86) International application number: PCT/EP2020/081034
(87) International publication number: WO 2021/099123

(56) References cited:
- WO-A1-2018/114453
- US-A- 4 149 990
- US-A- 4 740 570
- US-A- 5 599 760

## Description

### FIELD OF THE INVENTION

The present disclosure relates to a process for the preparation of a catalyst component for the polymerization of olefins CH₂=CHR, wherein R is hydrogen or a hydrocarbon radical having 1-12 carbon atoms. In particular, the present disclosure relates to a process for the preparation of catalyst components supported on Mg dichloride also comprising a Ti compound and one or more electron donor compounds.

### BACKGROUND OF THE INVENTION

One type of Ziegler-Natta catalysts for the polymerization of olefins includes titanium compounds supported on magnesium halides. Catalysts of this type are described for example in the U.S. patent No.4,298,718. Modifications of the catalyst performances can be obtained by the inclusion, in the solid catalyst itself, of organic electron donor compounds which are called "internal donors" (ID).

In the art, several ways are described for including the internal donors into the catalyst component. According to one general recipe for the preparation of stereospecific catalysts, after a first contact between MgCl₂ or its precursor with the electron donor compound and a titanium compound (e.g. TiCl₄), one or more further treatments of the so obtained solid with hot liquid TiCl₄ are needed. A drawback associated with this kind of process is that it is difficult to finely tune the final amount of donor because the successive treatments with the hot TiCl₄ remove a substantial part of it. Moreover, certain classes of electron donors cannot be used with this process simply because they are not stable under the hot treatments with TiCl₄. These drawbacks are particularly relevant in connection with certain kind of polyethylene catalysts that include a high amount of donors to work properly. One kind of catalyst preparation able to fix high amounts of donor on the catalyst component is that described for example in USP 4,521,573 which comprises the use of a large excess of the electron donor compound that acts as a solvent in respect of MgCl₂ and the titanium compound. The catalyst component can then be separated from the solution by precipitation or crystallization. This process also suffers from several drawbacks. First, certain donors are not usable because in view of their chemical structure they are not able to act as solvents. Second, it is not possible to prepare a catalyst component with high porosity unless a substantial amount of donor is removed from the said catalyst component or the catalyst is in its turn deposited on a porous inert support. In the last case however, an additional step and further materials are required with the consequence that complexity of the process and costs are increased.

WO2004/106388 describes the preparation of a solid catalyst component in which after a first step of reaction between the MgCl₂ compound, or its precursor, with the Ti compound, the electron donor compound is added to the intermediate solid obtained from the first step, as a last ingredient of the recipe. The electron donor compound is added to the solid in the presence of a liquid inert compound. In particular, it is dissolved in a hydrocarbon solvent which is then contacted with the solid intermediate. Several problems are associated with this method. First, for large scale production, the use of large amount of solvents is needed that have to be safely stored and controlled. This aspect impacts on sustainability and safety due to the fact that the solvents used in this field are highly flammable and/or explosive. In addition, since only a portion of the electron donor is fixed on the intermediate, the remaining solvent/donor liquid phase needs to be treated in order to re-use the solvent. Moreover, since the solvents may also extract by-products, the unconverted donor not fixed on the catalyst may be contaminated, it cannot be reused and needs to be separated and disposed of. WO2018/114453A, US5599760A, US4740570A and US4149990A disclose further processes for preparing catalyst components.

All these additional steps of separation and recovery increase plant complexity, lower sustainability and increase quantities of raw materials needed for the process.

It would be therefore advantageous to have a process for the preparation of a donor containing catalyst component in which the need of handling solvent and dispose of the unreacted donors becomes greatly reduced or eliminated.

### SUMMARY OF THE INVENTION

It is therefore an aspect of the present disclosure a process for preparing a catalyst component comprising Mg, Ti, and at least an electron donor compound (ID) said process comprising two or more steps of reaction in which in a first step (a) carried out at a temperature ranging from 0 to 150°C, a Mg based compound is reacted with a Ti compound, having at least a Ti-Cl bond, in an amount such that the Ti/Mg molar ratio is greater than 3 so as to generate an intermediate solid catalyst component containing Mg and Ti and, in a following step (b), the intermediate solid catalyst component (a) is contacted, in a gaseous dispersing medium, with a gaseous stream containing the electron donor compound (ID) thereby obtaining a final solid catalyst component having an ID/Ti molar ratio ranging from 0.5:1 to 20:1.

### DETAILED DESCRIPTION OF THE INVENTION

The at least one electron donor compound (ID) is preferably a molecule containing at least one functional group selected from esters, ketones, amines, amides, carbamates, carbonates, aliphatic ethers, nitriles, alkoxysilanes and glycols. The ID compound can be mono or multifunctional, meaning that the molecule can contain one or more of the above mentioned functional groups. In case the functional groups are more than one, they can belong to the same or different class. Monofunctional ID compounds are preferred.

As mentioned, the electron donor compound (ID) can be used alone or, in certain embodiments as a mixture of two or more different IDs.

One of the preferred class of IDs is that of the alkyl esters of C₁-C₂₀ aliphatic carboxylic acids and in particular Ci-Cs alkyl esters of aliphatic mono carboxylic acids such as ethylacetate, methyl formiate, ethylformiate, methylacetate, propylacetate, i-propylacetate, n-butylacetate, i-butylacetate. Ethylacetate is the preferred one.

Preferred alkoxysilanes are those of formula Rₐ⁵R_{b}⁶Si(OR⁷)_{c}, where a and b are integer from 0 to 2, c is an integer from 1 to 4 and the sum (a+b+c) is 4; R⁵, R⁶, and R⁷, are alkyl, cycloalkyl or aryl radicals with 1-18 carbon atoms optionally containing heteroatoms. Particularly preferred are the silicon compounds in which a is 0 or 1, c is 2 or 3, R⁶ is an alkyl or cycloalkyl group, optionally containing heteroatoms, and R⁷ is methyl. Examples of such preferred silicon compounds are methyltrimethoxysilane, dimethyldimethoxysilane, trimethylmethoxysilane and t-butyltrimethoxysilane.

Preferred amines are those of formula NR⁴₃ in which the R⁴ groups, are, independently, hydrogen or a C₁-C₂₀ hydrocarbon group with the proviso that they are not contemporaneously hydrogen. Preferably, R⁴ is a C₁-C₁₀ alkyl group. Specific examples are dietilamine, diisopropylamine and triethylamine.

Preferred amides are those of formula R⁵CONR⁶₂ in which R⁵ and R⁶ are, independently, hydrogen or a C₁-C₂₀ hydrocarbon group. Specific examples are formamide and acetamide.

Preferred nitriles are those of formula R³CN where R³ has the same meaning given above. A specific example is acetonitrile.

Preferred glycols are those having a total number of carbon atoms lower than 50. Among them particularly preferred are the 1,2 or 1,3 glycol having a total number of carbon atoms lower than 25. Specific examples are ethylenglycol, 1,2-propylenglycol and 1,3-propylenglycol.

Preferred aliphatic ethers are the C₂-C₂₀ aliphatic ethers and in particular cyclic ethers, preferably having 3-5 carbon atoms, such as tetrahydrofurane and dioxane. Among linear C₂-C₂₀ aliphatic ethers particularly preferred are dimethyl ether, diethyl ether and isoamyl ether.

It is a preferred aspect of the present disclosure the use of two or more IDs to be fixed on the catalyst component. In this case, it is preferable to use one ID selected from aliphatic ethers and one selected from aliphatic acid esters. Particularly preferred is the use of ethyl acetate as aliphatic acid ester and tetrahydrofurane as aliphatic ether. When used in said mixture the molar ratio between the aliphatic acid ester and the ether present in the final solid catalyst component ranges from 0.2:1 to 16:1 and, more preferably, from 0.5:1 to 10:1.

The titanium compound usable in step (a) can be selected from Ti tetrachlorides or the compounds of formula TiClₙ(OR¹)₄₋ₙ, where 0≤n≤3, and R¹ is C₁-C₁₀ hydrocarbon group. Titanium tetrachloride is the preferred compound.

The Mg based compound used in step (a) can be MgCl₂ or preferably a precursor of formula MgR^{II}₂ where the R^{II} groups can be independently C₁-C₂₀ hydrocarbon groups optionally substituted, -OR groups, -OCOR groups, halogen, in which R is a C₁-C₂₀ hydrocarbon groups optionally substituted, with the proviso that the R^{II} groups are not simultaneously halogen. Also usable as precursors are the Lewis adducts between Mg dihalides and Lewis bases. A particular and preferred class being constituted by the MgCl₂ (ROH)ₘ adducts in which R groups are C₁-C₂₀ hydrocarbon groups, preferably C₁-C₁₀ alkyl groups, and m is from 0.1 to 6, preferably from 0.5 to 3 and more preferably from 0.5 to 2. Adducts of this type can generally be obtained by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. The said adducts can also contain small amounts of salts or oxides of metals such as Cu, Zn and Bi as described in WO2014/048964, WO2014/161905, WO2015/135903,WO2016/050662, WO2018/011086. Another useable method for the spherulization is the spray cooling described for example in USP 5,100,849 and 4,829,034.

Particularly interesting are the MgCl₂●(EtOH)m adducts in which m is from 0.15 to 2.5 which can be obtained subjecting the adducts with a higher alcohol content to a thermal dealcoholation process carried out in nitrogen flow at temperatures comprised between 50 and 150°C until the alcohol content is reduced to the above value. A process of this type is described in EP395083.

These dealcoholated adducts may also be characterized by a porosity (measured by mercury method) due to pores with radius up to 1µm ranging from 0.15 to 3.0 cm³/g preferably from 0.25 to 2.5 cm³/g.

Step (a) can be carried out by suspending the Mg based compound, which is preferably the MgCl₂●(EtOH)m adducts, in TiCl₄ ; the mixture is heated up to temperatures ranging from 80-135°C and kept at this temperature for 0.5-2 hours. Other components, such as small amounts of salts or oxides of metals such as Cu, Zn and Bi can be used at this stage as described in WO2018/011086 and WO2017/042058. The treatment with the titanium compound can be carried out one or more times. Preferably it is repeated twice. At the end of the process the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated hydrocarbons.

The so obtained solid intermediate obtained from step (a) can, before being subjected to step (b), undergo a post-treatment in order to impart to it specific properties

In a specific embodiment, the solid intermediate can be pre-polymerized in a pre-polymerization step. The pre-polymerization can be carried out with any of the olefins CH₂=CHR', where R' is H or a C₁-C₁₀ hydrocarbon group. In particular, it is especially preferred to pre-polymerize ethylene or propylene or mixtures thereof with one or more α-olefins, said mixtures containing up to 20% in moles of α-olefin, forming amounts of pre-polymer from about 0.1 g up to about 1000 g per gram of solid intermediate, preferably from about 0.5 to about 500 g per gram per gram of solid intermediate, and especially from 0.5 to 50 grams per gram of solid intermediate. The pre-polymerization step can be carried out at temperatures from 0 to 80°C, preferably from 5 to 70°C, in the liquid or gas phase. The pre-polymerization of the intermediate with ethylene or propylene in order to produce an amount of polymer ranging from 0.5 to 20 g per gram of intermediate is particularly preferred. The pre-polymerization is carried out with the use of a cocatalyst such as organoaluminum compounds that can also be used in combination with one or more external donors that are below discussed in detail.

As mentioned above, the solid intermediate product, either as such or prepolymerized, in step (b) is brought into contact with the ID compound to be fixed on it.

As mentioned above, the amount of ID compound fixed on the catalyst component is such that ID/Ti molar ranging from 0.5:1 to 20:1, preferably from 1.0:1 to 15:1 and more preferably from 1.5:1 to 13:1.

In a specific embodiment, when the ID compound is selected from aliphatic ethers, the ID/Ti molar ratio can range from 3.0:1 to 15:1 and preferably from 5:1 to 13:1.

In another specific embodiment when the ID compound is selected from alkyl esters of C₁-C₂₀ aliphatic carboxylic acids, the ID/Ti molar ratio can range from 1.5:1 to 7:1 and preferably from 2:1 to 6: 1.

In a further specific embodiment, when the ID compound is a mixture of an ID selected from aliphatic ethers and one selected from aliphatic acid esters, the ID (total)/Ti molar ratio can range from 1.5:1 to 6:1 and preferably from 2:1 to 6:1.

Although in the process of the present disclosure the efficiency of donor fixation (ratio between the amount of donor fixed with respect to the amount of donor fed in step (b)) is high, the molar ratio between the ID fed in step (b) and the amount of Ti atoms in the solid intermediate is preferably higher than that determined on the final solid catalyst component. Due to the fact that the efficiency can be higher than 60% the skilled in the art can easily determine the amount of ID to be fed in order to have the desired amount on the final catalyst component.

As mentioned, the contact between the solid intermediate coming from step (a) and the gaseous stream of the ID compound takes place in a gaseous medium as a dispersing medium.

The gaseous stream may be formed either by the pure ID (or IDs) being in gaseous form or by a an inert gas stream which may include the ID compound. In this latter case, the inert gas stream can carry the ID compound which is either in gaseous or liquid form.

Pure ID in a gaseous form can be obtained by bringing it at a temperature sufficiently higher than the equilibrium temperature at a given pressure. Then, once in gaseous state, the ID can be fed to the reactor for the contact with the solid intermediate.

In a preferred embodiment a stream of an inert gas containing the ID compound is employed.

Particularly when operating in a small scale, this can be obtained for example by letting the stream of the inert gas, flowing on the surface of the liquid ID compound which is kept warm but preferably not boiling. The inert gas flowing on the liquid surface, takes away the gas portion of the ID in equilibrium with the liquid phase and carries it in the reactor for the contact with the solid intermediate.

In another preferred embodiment, which is particularly used when operating in a small scale, the stream of an inert gas containing the ID compound is obtained for example by letting the stream of the inert gas, bubbling in the mass of the ID in liquid form and then withdrawing said inert gas stream which now containing droplets of liquid ID entrapped in it. Also in this case, the gaseous stream containing the ID is fed to the reactor for the contact with the solid intermediate.

In a large scale set-up the donor in liquid form can be fed, through a mass-flow meter, to a pipe where a main stream of warm inert gas flows thereby causing vaporization of the ID.

In general, the methods in which an inert gas stream is used are preferred because they allow a more accurate dosing of the ID in respect of the amount of catalysts and, moreover, the inert gas carrying the ID also contribute to the fluidization of the particles thereby ensuring homogeneous distribution of the donor. In addition, they are more versatile due to the fact that it is not necessary the intense heating of the ID. It is enough to warm the inert gas stream at the desired temperature at which the contact between the ID and the solid intermediate particles should take place.

The inert gas can be any substance being in the gaseous form at room temperature and not reactive towards the ingredients employed in the catalyst preparation. As an example, nitrogen or light hydrocarbons like propane can be used. Nitrogen being the most preferred.

The contact temperature in step (b) is comprised in the range from 10 to 120°C and preferably from 20° to 100°C, more preferably from 30 to 80°C. It is plane that temperatures causing the decomposition or degradation of any specific reagents should be avoided even if they fall within the generally suitable range. Also the time of the treatment can vary in dependence of other conditions such as nature of the reagents, temperature, concentration etc. As a general indication this contact step can last from 10 minutes to 10 hours more frequently from 0.5 to 5 hours. If desired, in order to further increase the final donor content, this step can be repeated one or more times.

It is especially preferred that during the contact the particles of the solid intermediate are kept in motion so as to avoid preferential zones of contact with the ID compound. Such motion can be obtained in several ways. For example the reactor in which the contact takes place can be a gas-phase reactor in which the gas flow which maintains the particle suspended is generated by a compressor which pumps the fluidizing gas through a grid generating a vertical fluidizing gas flow that creates a bed of suspended particles (fluidized bed reactor). In a particular embodiment, the fluidizing gas is the same used for carrying the ID in the inert gas stream.

In a particular embodiment, the contact step (b) can be carried out in a loop reactor comprising a densified zone in which the particles flow in a densified form under the action of gravity and a fast fluidization zone where the particles flow under fast fluidization conditions. Preferably, the fast fluidization is obtained by a flow of an inert gas, such as nitrogen.

At the end of this step the solid particles are easily recovered by letting them settle down after stopping the stirring or the fluidization.

The ID compound that has not been fixed on the solid intermediate compound can be easily recovered by letting it condensate from the inert gas stream. This can be obtained by feeding the inert gas stream carrying the ID to a heat exchanger.

By operating according to this method it is possible to obtain final solid catalyst components with the desired amount of ID without the need of recovering, separating and/or disposing of large amount of solvents. Preferably, the inert gas stream flowing out of the heat exchanger can directly be recycled to the reactor where step (b) takes place.

Particularly when the ID compound is selected from cyclic aliphatic ethers such as tetrahydrofurane, the solid catalyst component containing the supported ID is preferably subjected to a thermal treatment carried out at temperatures ranging from 70 to 150°C, preferably from 80°C to 130°C, and more preferably from 85 to 100°C. Such a treatment (annealing) is preferably carried out within the same reactor in which the ID supportation takes place by raising the temperature of fluidizing inert gas to the desired value for the requested time. The heating time is not fixed but may vary depending also on the other conditions such as the maximum temperature reached. It generally ranges from 0.1 to 10 hours, more specifically from 0.5 to 6 hours. Usually, higher temperatures allow the heating time to be shorter while, on the opposite, lower temperatures may involve longer reaction times. It is preferred that the annealing process be carried out immediately after the previous step, without the need of isolating the solid product after donor supportation.

The catalysts obtained show good performances. In some cases, the produce polymers with higher bulk density with respect to those obtained by catalyst in which step (b) is carried out in a liquid dispersing medium. In all cases, the amount of saved solvent (SSA) is such that the process sustainability is greatly improved.

The solid catalyst components according to the present disclosure are converted into catalysts for the polymerization of olefins by reacting them with organoaluminum compounds according to known methods.

In particular, it is an object of the present invention a catalyst for the polymerization of olefins CH₂=CHR, in which R is hydrogen or a hydrocarbyl radical with 1-12 carbon atoms, comprising the product of the reaction between:
(i) a solid catalyst component as described above,
(ii) an alkylaluminum compound and, optionally,
(iii) an external electron donor compound (ED).

The alkyl-Al compound can be preferably selected from the trialkyl aluminum compounds such as for example trimethylaluminum (TMA), triethylaluminum (TEAL), tri-n-butylaluminum, tri-n-hexylaluminum, tri-n-octylaluminum. Also alkylaluminum halides and in particular alkylaluminum chlorides such as diethylaluminum chloride (DEAC), diisobutylalumunum chloride, Al-sesquichloride and dimethylaluminum chloride (DMAC) can be used. It is also possible to use, and in certain cases preferred, mixtures of trialkylaluminum's with alkylaluminum halides. Among them mixtures TEAL/DEAC and TIBA/DEAC are particularly preferred.

The external electron donor compound ED can be equal to or different from the (ID) compound used in step (b). Preferably it is selected from the group consisting of ethers, esters, amines, nitriles, silanes and mixtures of the above. In particular, it can advantageously be selected from the C₂-C₂₀ aliphatic ethers and in particulars cyclic ethers preferably having 3-5 carbon atoms cyclic ethers such as tetrahydrofurane, dioxane.

In addition, the electron donor compound can also be advantageously selected from silicon compounds of formula Rₐ⁵R_{b}⁶Si(OR⁷)_{c}, where a and b are integer from 0 to 2, c is an integer from 1 to 3 and the sum (a+b+c) is 4; R⁵, R⁶, and R⁷, are alkyl, cycloalkyl or aryl radicals with 1-18 carbon atoms optionally containing heteroatoms. Particularly preferred are the silicon compounds in which a is 0, c is 3, R⁶ is a branched alkyl or cycloalkyl group, optionally containing heteroatoms, and R⁷ is methyl. Examples of such preferred silicon compounds are cyclohexyltrimethoxysilane, t-butyltrimethoxysilane and thexyltrimethoxysilane.

The above mentioned components (i)-(iii) can be fed separately into the reactor where, under the polymerization conditions can exploit their activity. It constitutes however a particular embodiment the pre-contact of the above components, optionally in the presence of small amounts of olefins, for a period of time ranging from 0.1 to 120 minutes preferably in the range from 1 to 60 minutes. The pre-contact can be carried out in a liquid diluent at a temperature ranging from 0 to 90°C preferably in the range of 20 to 70°C.

The so formed catalyst system can be used directly in the main polymerization process or alternatively, it can be pre-polymerized beforehand especially if a prepolymerization of the intermediate solid was not carried out before step (b). A pre-polymerization step is usually preferred when the main polymerization process is carried out in the gas phase. The pre-polymerization can be carried out with any of the olefins CH₂=CHR, where R is H or a C₁-C₁₀ hydrocarbon group. In particular, it is especially preferred to pre-polymerize ethylene or propylene or mixtures thereof with one or more α-olefins, said mixtures containing up to 20% in moles of α-olefin, forming amounts of polymer from about 0.1 g per gram of solid component up to about 1000 g per gram of solid catalyst component. The pre-polymerization step can be carried out at temperatures from 0 to 80°C, preferably from 5 to 70°C, in the liquid or gas phase. The pre-polymerization step can be performed in-line as a part of a continuous polymerization process or separately in a batch process. The batch pre-polymerization of the catalyst of the disclosure with ethylene or propylene in order to produce an amount of polymer ranging from 0.5 to 20 g per gram of catalyst component is particularly preferred.

Examples of gas-phase processes wherein it is possible to use the catalysts of the disclosure are described in WO 92/21706, USP 5,733,987 and WO 93/03078. These processes comprise a pre-contact step of the catalyst components, a pre-polymerization step and a gas phase polymerization step in one or more reactors in a series of fluidized or mechanically stirred bed.

According to one embodiment, a gas-phase process for the polymerization of olefins comprises the following steps in any mutual order:
a) polymerizing ethylene, optionally together with one or more comonomers, in a gas-phase reactor in the presence of hydrogen and a catalyst system according to the present disclosure; and
b) polymerizing ethylene optionally with one or more comonomers in another gas-phase reactor in the presence of hydrogen and the catalysts system of step (a);
where in at least one of said gas-phase reactors the growing polymer particles flow upward through a first polymerization zone (riser) under fast fluidization or transport conditions, leave the riser and enter a second polymerization zone (downcomer) through which they flow downward under the action of gravity, leave the downcomer and are reintroduced into the riser for establishing a circulation of polymer between the two polymerization zones.

In the first polymerization zone (the riser), fast fluidization conditions may be established by feeding a gas mixture comprising one or more olefins (i.e., ethylene and comonomer(s)) at a velocity higher than the transport velocity of the polymer particles. The velocity of the gas mixture may be 0.5-15 m/s, including 0.8-5 m/s. The terms "transport velocity" and "fast fluidization conditions" are described, for example, in D. Geldart, Gas Fluidisation Technology, , J. Wiley & Sons Ltd., (1986).

In the second polymerization zone (the downcomer), the polymer particles flow under the action of gravity in a densified form such that high density values are reached (as defined by mass of polymer per volume of reactor), which approaches the bulk density of the polymer. In other words, the polymer flows vertically down through the downcomer in a plug flow (packed flow mode), so that small quantities of gas are entrained between the polymer particles.

When polymerizing ethylene, and optionally comonomers, in gas-phase the amount of hydrogen used, and therefore the pressure ratio H₂/C₂⁻ depends on the type of polyethylene to be produced and in particular from its desired molecular weight expressed in terms Melt Flow Rate determined according to ASTM-D 1238 condition E. For relatively lower molecular weight (high values of MFR) a higher amount of hydrogen is needed and therefore also the pressure ratio H₂/C₂⁻will be higher. Generally however, it ranges from 0.5 to 5, preferably from 1 to 4 and more preferably from 1.5 to 3.5.

As already mentioned, the catalysts of the present disclosure can also be used for preparing linear low density polyethylenes (LLDPE, having a density lower than 0.940 g/cm³) and very-low-density and ultra-low-density polyethylenes (VLDPE and ULDPE, having a density lower than 0.920 g/cm³, to 0.880 g/cm³) consisting of copolymers of ethylene with one or more alpha-olefins having from 3 to 12 carbon atoms, having a mole content of units derived from ethylene of higher than 80%. However, they can also be used to prepare a broad range of polyolefin products including, for example, high density ethylene polymers (HDPE, having a density higher than 0.940 g/cm³), comprising ethylene homopolymers and copolymers of ethylene with alpha-olefins having 3-12 carbon atoms; elastomeric copolymers of ethylene and propylene and elastomeric terpolymers of ethylene and propylene with smaller proportions of a diene having a content by weight of units derived from ethylene of between about 30 and 70%.

The following examples are given in order to further describe the present disclosure.

### CHARACTERIZATION

The properties are determined according to the following methods:
Melt Index E: ASTM-D 1238 condition E
Melt Index F: ASTM-D 1238 condition F
Melt Index P: ASTM D 1238 condition P
Bulk density: DIN-53194
Determination of Mg, Ti (tot): has been carried out via inductively coupled plasma emission spectroscopy (ICP) on a "I C.P SPECTROMETER ARL Accuris".

The sample was prepared by analytically weighting, in a "fluxy" platinum crucible", 0.1÷03 g of catalyst and 3 gr of lithium metaborate/tetraborate 1/1 mixture. The crucible is placed on a weak Bunsen flame for the burning step and then after addition of some drops of KI solution inserted in a "Claisse Fluxy" apparatus for the complete burning. The residue is collected with a 5% v/v HNO₃ solution and then analyzed via ICP at the following wavelength: Magnesium, 279.08 nm; Titanium, 368.52 nm; Aluminum, 394.40 nm.
Determination of Cl: has been carried out via potentiometric titration.
Determination of ED: via Gas-Chromatography analysis
Average Particle Size of the adduct and catalysts

Determined by a method based on the principle of the optical diffraction of monochromatic laser light with the "Malvern Instr. 2600" apparatus. The average size is given as P50.

### Porosity and surface area with mercury:

The measure is carried out using a "Porosimeter 2000 series" by Carlo Erba.

The porosity is determined by absorption of mercury under pressure. For this determination use is made of a calibrated dilatometer (diameter 3 mm) CD3 (Carlo Erba) connected to a reservoir of mercury and to a high-vacuum pump (1·10-2 mbar). A weighed amount of sample is placed in the dilatometer. The apparatus is then placed under high vacuum (<0.1 mm Hg) and is maintained in these conditions for 20 minutes. The dilatometer is then connected to the mercury reservoir and the mercury is allowed to flow slowly into it until it reaches the level marked on the dilatometer at a height of 10 cm. The valve that connects the dilatometer to the vacuum pump is closed and then the mercury pressure is gradually increased with nitrogen up to 140 kg/cm². Under the effect of the pressure, the mercury enters the pores and the level goes down according to the porosity of the material.

The porosity (cm³/g), both total and that due to pores up to 1µm, the pore distribution curve, and the average pore size are directly calculated from the integral pore distribution curve which is function of the volume reduction of the mercury and applied pressure values (all these data are provided and elaborated by the porosimeter associated computer which is equipped with a "MILESTONE 200/2.04" program by C. Erba.

### Saved Solvent Amount (SSA)

It corresponds to the amount of solvent (liters) per Kg of catalyst needed to support the electron donor on the solid intermediate catalyst (and to anneal when this step is carried out) according to the procedure of the comparative example of reference.

### EXAMPLES

### General procedure for the preparation of the spherical MgCl₂(EtOH) adducts

A magnesium chloride and alcohol adduct containing 2.8 mols of alcohol was prepared following the method described in example 2 of USP 4,399,054, but working at 2000 RPM instead of 10000 RPM. The so obtained adduct was dealcoholated up to an amount of alcohol of 25% wt via a thermal treatment, under nitrogen stream, over a temperature range of 50-150°C.

### Example 1

### Procedure for the preparation of the intermediate prepolymerized solid catalyst component

Into a 2 L four-necked round flask, purged with nitrogen, 1 L of TiCl₄ was introduced at 0°C. Then, at the same temperature, 70 g of a spherical MgCl₂/EtOH adduct containing 25% wt of ethanol and prepared as described above were added under stirring. The temperature was raised to 130°C in 3 hours and maintained for 60 minutes. Then, the stirring was discontinued, the solid product was allowed to settle and the supernatant liquid was siphoned off. Fresh TiCl₄ was added up to 1 L total volume and the treatment at 130°C for 60 minutes was repeated. After settling and siphoning, the solid residue was then washed five times with hexane at 50°C and two times with hexane at 25 °C and dried under vacuum at 30°C.

Into a 2 L four-necked glass reactor provided with stirrer, 812 cc of hexane at 10°C and whilst stirring 50 g of the catalyst component prepared as described above were introduced at 10°C. Keeping constant the internal temperature, 15 g of tri-n-octylaluminum (TNOA) in hexane (about 80 g/l) and an amount of cyclohexylmethyl-dimethoxysilane (CMMS) such as to have molar ratio TNOA/CMMS of 6, were slowly introduced into the reactor and the temperature was maintained to 10°C. After 10 minutes stirring, a total amount of 65 g of propylene were introduced into the reactor at the same temperature in 6.5 hours at constant rate. Then, the whole content was filtered and washed three times with hexane at a temperature of 30°C (100 g/l). After drying the resulting pre-polymerized catalyst (A) was analyzed. Results (Mg, Ti) are reported in table 1.

### Donor Supportation

In a 0.8 L closed circuit jacketed fluidized bed reactor having a diameter of 45mm, 100g of pre-polymerized catalyst were loaded under nitrogen atmosphere at room temperature.

Then, the gas circuit was closed and the gas pump was turned on and adjusted in order to reach a good solid fluidization inside the reactor and the temperature was raised up to 50°C.

When the solid inside the reactor reached the desired temperature ethylacetate (EA) and tetrahydrofuran (THF) were loaded into the liquid feeding system and added to the catalyst in about 60', using the nitrogen gas stream, in such amount to have a molar ratio EA/Mg of 0.25 and THF/Mg of 0.25. The inert gas flowing on the warm liquid surface, took away the gas portion of the ID in equilibrium with the liquid phase and carried it in the reactor for the contact with the solid intermediate.

After the Lewis Bases adduction the solid remained under fluidization in the reactor for 60' at 50°C in order to complete the reaction (maturation step).

Then, the temperature was decreased down to 20°C, the pump was turned off and nitrogen was feed inside the reactor in order to discharge the solid.

### Comparative Example 1

### Donor supportation

About 100 g of the solid prepolymerized catalyst prepared as described in Example 1 were charged in a glass reactor purged with nitrogen and slurried with 1.0 L of heptane at 50°C.

Then, ethylacetate (EA) and tetrahydrofuran (THF) were carefully added dropwise (in 60') in such an amount to have a molar ratio EA/Mg of 0.25 and THF/Mg of 0.25.

The slurry was kept under stirring for 1.5 h still having 50°C as internal temperature. Then, the stirring was discontinued, the solid product was allowed to settle and the supernatant liquid was siphoned off. The solid was washed under stirring one time adding anhydrous heptane at 50°C up to 1 L of volume and then the stirring was discontinued, the solid product was allowed to settle and the supernatant liquid was siphoned off. Then the volume was restored to 1 L with anhydrous heptane and the temperature was raised up to 85°C and maintained under stirring for 2 hours. Then, the stirring was discontinued, the solid product was allowed to settle and the supernatant liquid was siphoned off.

The solid was washed 3 times with anhydrous hexane (3 x 1000 mL) at 25°C, recovered, dried under vacuum and analyzed. The results are reported in Table 1.

### Example 2

A catalyst component containing ethyl acetate and THF was prepared according to the process described in Example 1 and subject to annealing.

After the donor adduction and the maturation phase an annealing step was carried out on the pre-polymerized adduced catalyst.

The temperature was raised from 50°C up to 85°C and the solid was maintained under fluidization at this temperature for 60'.

Then, the temperature was decreased down to 20°C, the pump was turned off and nitrogen was fed inside the reactor in order to discharge the solid.

### Example 3

### Preparation of the solid intermediate component.

Into a 500 mL four-necked round flask, purged with nitrogen, 250 mL of TiCl₄ were introduced at 0°C. Then, at the same temperature, 10 grams of spherical adduct containing 25%wt of ethanol and having particle size P50 of about 40µm were added under stirring. The temperature was raised to 130°C and maintained at that temperature for 2 hours. Then, the stirring was discontinued, the solid product was allowed to settle and the supernatant liquid was siphoned off. A new amount of fresh TiCl₄ was added to the flask, such to reach the initial liquid volume. The temperature was maintained at 110°C for 1 hour. Again, the solid was allowed to settle, and the liquid was siphoned off.

The solid was then washed three times with anhydrous hexane (100 mL at each washing) at 60 °C and twice at 40°C. Finally, the solid intermediate component was dried under vacuum.

### Donor Supportation

In a 0.8 L DN45 closed circuit jacketed fluidized bed reactor 50g of the solid intermediate component were loaded under nitrogen atmosphere at room temperature.

Then, the gas circuit was closed and the gas pump was turned on and adjusted in order to reach a good solid fluidization inside the reactor and then the temperature was raised up to 50°C.

When the solid reached the desired temperature the tetrahydrofuran (THF) was loaded in the liquid feeding system and added to the catalyst in about 60', using the nitrogen gas stream, in such amount to have a molar ratio THF/Mg of 0.87. The inert gas flowing on the liquid surface, took away the gas portion of the ID in equilibrium with the liquid phase and carried it in the reactor for the contact with the solid intermediate.

After the THF adduction the temperature was raised from 50°C up to 95°C and the solid was maintained under fluidization at this temperature for 120'.

Then, the temperature was decreased to 20°C, the pump was turned off and nitrogen was fed inside the reactor in order to discharge the solid.

### Comparative Example 2

10 grams of the solid intermediate catalyst component prepared as described in Example 3 was charged, at room temperature, with 250 mL of hexane in a 500 mL four-necked round flask equipped with a mechanical stirrer and purged with nitrogen. At the same temperature, under stirring THF was added dropwise, in an amount to charge a molar ratio THF/Mg=0.87. The temperature was raised to 50 °C and the mixture was stirred for 2 hours. Then, the stirring was discontinued, the solid product was allowed to settle and the supernatant liquid was siphoned off.

The solid was washed twice with anhydrous hexane (2 x 100 mL) at 40 °C, recovered, dried under vacuum.

### Annealing

Into a 500 cm³ four-necked round flask, purged with nitrogen, 250 cm³ of heptane and 10 g of the solid obtained by the previous step were introduced at 25°C. Under stirring, the temperature was raised to 95°C in about 30 minutes and maintained for 2 hours. Then, the temperature was decreased to 80°C, the stirring was discontinued, the solid product was allowed to settle for 30 minutes and the supernatant liquid was siphoned off. The characterization of the solid catalyst component is reported in Table 1.

### Example 4

### Procedure for the preparation of the intermediate solid catalyst component

Into a 2 L four-necked round flask, purged with nitrogen, 1 L of TiCl₄ was introduced at 0°C. Then, at the same temperature, 70 g of a spherical MgCl₂/EtOH adduct containing 25% wt of ethanol and prepared as described above were added under stirring. The temperature was raised to 130 °C in 3 hours and maintained for 60 minutes. Then, the stirring was discontinued, the solid product was allowed to settle and the supernatant liquid was siphoned off. Fresh TiCl₄ was added up to 1 L total volume and the treatment at 130°C for 60 minutes was repeated. After settling and siphoning, the solid residue was then washed five times with hexane at 50°C and two times with hexane at 25 °C and dried under vacuum at 30 °C.

### Donor Supportation

In a 0.8 L closed circuit jacketed fluidized bed reactor having a diameter of 45mm, 50g of intermediate solid catalyst were loaded under nitrogen atmosphere at room temperature. The gas circuit was closed and the gas pump was turned on and adjusted in order to reach a good solid fluidization inside the reactor and the temperature was raised up to 50°C.

When the solid reached the desired temperature the ethylacetate (EA) was loaded in the liquid feeding system and added to the catalyst in about 60', using the nitrogen gas stream, in such amount to have a molar ratio EA/Mg of 0.625. The inert gas flowing on the liquid surface, took away the gas portion of the ID in equilibrium with the liquid phase and carried it in the reactor for the contact with the solid intermediate.

After the ethyl acetate adduction the solid remained under fluidization in the reactor for 60' at 50°C in order to complete the reaction (maturation step).

Then, the temperature was decreased to 20°C, the pump was turned off and nitrogen was feed inside the reactor in order to discharge the solid.

### Comparative Example 3

18.75 grams of the solid intermediate catalyst component prepared as described in Example 4 was charged, at room temperature, with 250mL of hexane in a 500 mL four-necked round flask equipped with a mechanical stirrer and purged with nitrogen. At the same temperature, under stirring ethyl acetate (EA) was added dropwise, in an amount to charge a molar ratio EA/Mg=0.625. The temperature was raised to 50 °C and the mixture was stirred for 2 hours. Then, the stirring was discontinued, the solid product was allowed to settle and the supernatant liquid was siphoned off. The solid was washed twice with anhydrous hexane (2 x 100 mL) at 40 °C, recovered, dried under vacuum. The characterization of the solid catalyst component is reported in Table 1.

**Table 1**

| Ex | ID | EA/Mg | THF/Mg | Mg | Ti | ID tot | ID fixed | ID/Ti | P50 | Por. | SSA | Yield | F/E | BD |
|---|---|---|---|---|---|---|---|---|---|---|---|---|---|---|
| | | mr | mr | wt. % | wt.% | wt.% | wt% | m.r | µm | cm³/g | L/Kgcat | Kg/g | | g/cm³ |
| 1 | EA/THF | 0.25 | 0.25 | 8.6 | 1.5 | 12.5 | 84 | 4.8 | 75 | 0.33 | 26 | 5.0 | 30 | 0.253 |
| 2 | EA/THF | 0.25 | 0.25 | 8.5 | 1.5 | 11 | 89 | 5.0 | 76 | 0.33 | 31 | 6.7 | 29.6 | 0.264 |
| 3 | THF | - | 0.87 | 14.5 | 2.9 | 27.4 | 74 | 6.2 | - | - | 50 | 17.2 | 29.5 | 0.336 |
| 4 | EA | 0.625 | | 16 | 3.1 | 28.2 | 78 | 4.3 | 59 | 0.46 | 25 | 11.5 | 31.5 | 0.337 |
| 1C | EA/THF | 0.25 | 0.25 | 10.7 | 1.8 | 11.3 | 66 | 3.8 | 81 | 0.59 | - | 9.9 | 34.0 | 0.240 |
| 2C | THF | | 0.87 | 15.5 | 2.0 | 29.8 | 74 | 10 | - | - | - | 17.5 | 29.5 | 0.340 |
| 3C | EA | 0.625 | | 14.9 | 2.9 | 26.1 | 77.5 | 4.9 | 60 | 0.543 | - | 14.2 | 29.2 | 0.308 |

## Claims

1. A process for preparing a catalyst component comprising Mg, Ti, and at least an electron donor compound (ID) said process comprising two or more steps of reaction in which in a first step (a) carried out at a temperature ranging from 0 to 150°C, a Mg based compound is reacted with a Ti compound, having at least a Ti-Cl bond, in an amount such that the Ti/Mg molar ratio is greater than 3 so as to generate an intermediate solid catalyst component containing Mg and Ti and, in a following step (b), the intermediate solid catalyst component (a) is contacted, in a gaseous dispersing medium, with a gaseous stream containing the electron donor compound ID thereby obtaining a final solid catalyst component having an ID/Ti molar ratio ranging from 0.5: 1 to 20:1.

2. The process according to claim 1 in which at least one electron donor compound (ID) is preferably a molecule containing at least one functional group selected from esters, ketones, amines, amides, carbamates, carbonates, aliphatic ethers, nitriles, alkoxysilanes and glycols.

3. The process according to claim 2 in which the ID compound is selected from the group consisting of C₂-C₂₀ aliphatic ethers and alkyl esters of C₁-C₂₀ aliphatic carboxylic acids.

4. The process according to any of the preceding claims in which the ID compound is monofunctional.

5. The process according to any of the preceding claims in which the ID compound is selected from the group consisting of tetrahydrofurane, methylformiate and ethylacetate ethylformiate, methylacetate, propylacetate, i-propylacetate, n-butylacetate, i-butylacetate, methyltrimethoxysilane, dimethyldimethoxysilane, trimethylmethoxysilane.

6. The process according to any of the preceding claims in which two or more IDs are used.

7. The process according to claim 6 in which one ID is selected from aliphatic ethers, in particular tetrahydrofurane, and another selected from aliphatic acid esters in particular ethyl acetate.

8. The process according to any of the preceding claims in which the Mg compound is Lewis adduct of formula MgCl₂ (ROH)ₘ adducts in which R groups are C₁-C₂₀ hydrocarbon groups and m is from 0.1 to 6.

9. The process according to any of the preceding claims in which the solid intermediate is pre-polymerized before being subjected to step (b).

10. The process according to any of the preceding claims in which in step (b) the amount of ID compound fixed on the catalyst component is such that ID/Ti molar ranges from 1.0:1 to 15:1 and more preferably from 1.5:1 to 13:1.

11. The process according to any of the preceding claims in which the gaseous stream comprises an inert gas carrying the ID compound in gaseous or liquid form.

12. The process according to claim 11 in which the ID compound in the inert gas stream is in gaseous form.

13. The process according to any of claims 11-12 in which the inert gas is nitrogen.

14. The process according to any of the preceding claims in which step b is carried out in a gas-phase reactor where the fluidizing gas is the same as the inert gas stream carrying the ID.

15. The process according to any of the preceding claims in which the contact temperature in step (b) is comprised in the range from 10 to 120°C.

## Patentansprüche

1. Verfahren zur Herstellung einer Katalysatorkomponente, umfassend Mg, Ti und mindestens eine Elektronendonorverbindung (ID), wobei das Verfahren zwei oder mehr Reaktionsschritte umfasst, wobei in einem ersten Schritt (a), der bei einer Temperatur im Bereich von 0 bis 150 °C durchgeführt wird, eine Verbindung auf Mg-Basis mit einer Ti-Verbindung, die mindestens eine Ti-Cl-Bindung hat, in einer solchen Menge umgesetzt wird, dass das Molverhältnis von Ti/Mg größer als 3 ist, um so eine intermediäre feste Katalysatorkomponente zu erzeugen, die Mg und Ti enthält, und wobei in einem Folgeschritt (b) die intermediäre feste Katalysatorkomponente (a) in einem gasförmigen Dispergiermedium mit einem gasförmigen Strom kontaktiert wird, der die Elektronendonorverbindung ID enthält, wodurch eine fertige feste Katalysatorkomponente mit einem Molverhältnis von ID/Ti im Bereich von 0,5:1 bis 20:1 erhalten wird.

2. Verfahren nach Anspruch 1, wobei mindestens eine Elektronendonorverbindung (ID) vorzugsweise ein Molekül ist, das mindestens eine funktionelle Gruppe ausgewählt aus Estern, Ketonen, Aminen, Amiden, Carbamaten, Carbonaten, aliphatischen Ethern, Nitrilen, Alkoxysilanen und Glykolen enthält.

3. Verfahren nach Anspruch 2, wobei die ID-Verbindung ausgewählt ist aus der Gruppe, die aus aliphatischen C₂-C₂₀-Ethern und Alkylestern von aliphatischen C₁-C₂₀-Carbonsäuren besteht.

4. Verfahren nach einem der vorhergehenden Ansprüche, wobei die ID-Verbindung monofunktionell ist.

5. Verfahren nach einem der vorhergehenden Ansprüche, wobei die ID-Verbindung ausgewählt ist aus der Gruppe bestehend aus Tetrahydrofuran, Methylformiat und Ethylacetat, Ethylformiat, Methylacetat, Propylacetat, i-Propylacetat, n-Butylacetat, i-Butylacetat, Methyltrimethoxysilan, Dimethyldimethoxysilan, Trimethylmethoxysilan.

6. Verfahren nach einem der vorhergehenden Ansprüche, wobei zwei oder mehr IDs verwendet werden.

7. Verfahren nach Anspruch 6, wobei ein ID ausgewählt ist aus aliphatischen Ethern, insbesondere Tetrahydrofuran, und ein anderer ausgewählt ist aus aliphatischen Säureestern, insbesondere Ethylacetat.

8. Verfahren nach einem der vorhergehenden Ansprüche, wobei die Mg-Verbindung ein Lewis-Addukt mit der Formel der Addukte von MgCl₂·(ROH)ₘ ist, worin die R-Gruppen C₁-C₂₀-Kohlenwasserstoffgruppen sind und m 0,1 bis 6 ist.

9. Verfahren nach einem der vorhergehenden Ansprüche, wobei das feste Intermediat vorpolymerisiert wird, bevor es Schritt (b) unterzogen wird.

10. Verfahren nach einem der vorhergehenden Ansprüche, wobei in Schritt (b) die Menge an ID-Verbindung, die auf der Katalysatorkomponente fixiert wird, derart ist, dass das Molverhältnis von ID/Ti im Bereich von 1,0:1 bis 15:1 und bevorzugter von 1,5:1 bis 13:1 liegt.

11. Verfahren nach einem der vorhergehenden Ansprüche, wobei der gasförmige Strom ein Inertgas umfasst, welches die ID-Verbindung in gasförmiger oder flüssiger Form trägt.

12. Verfahren nach Anspruch 11, wobei die ID-Verbindung in dem Inertgasstrom in gasförmiger Form vorliegt.

13. Verfahren nach einem der Ansprüche 11 bis 12, wobei das Inertgas Stickstoff ist.

14. Verfahren nach einem der vorhergehenden Ansprüche, wobei Schritt (b) in einem Gasphasenreaktor durchgeführt wird, wobei das Verwirbelungsgas das gleiche wie der Inertgasstrom ist, der den ID trägt.

15. Verfahren nach einem der vorhergehenden Ansprüche, wobei die Kontakttemperatur in Schritt (b) im Bereich von 10 bis 120 °C liegt.

## Revendications

1. Procédé de préparation d'un constituant catalytique comprenant Mg, Ti et au moins un composé donneur d'électrons (ID), ledit procédé comprenant deux étapes de réaction, ou plus, dans lequel, dans une première étape (a) réalisée à une température située dans la plage de 0 à 150 °C, un composé à base de Mg est mis à réagir avec un composé de Ti, présentant au moins une liaison Ti-Cl, en une quantité telle que le rapport molaire Ti/Mg est supérieur à 3 de façon à générer un constituant catalytique solide intermédiaire contenant Mg et Ti et, dans une étape suivante (b), le constituant catalytique solide intermédiaire (a) est mis en contact, dans un milieu de dispersion gazeux, avec un flux gazeux contenant le composé donneur d'électrons ID, ce qui permet d'obtenir un constituant catalytique solide final présentant un rapport molaire ID/Ti situé dans une plage de 0,5:1 à 20: 1.

2. Procédé selon la revendication 1, dans lequel au moins un composé donneur d'électrons (ID) est de préférence une molécule contenant au moins un groupe fonctionnel choisi parmi les esters, les cétones, les amines, les amides, les carbamates, les carbonates, les éthers aliphatiques, les nitriles, les alcoxysilanes et les glycols.

3. Procédé selon la revendication 2, dans lequel le composé ID est choisi dans le groupe constitué par les éthers aliphatiques en C₂-C₂₀ et les esters alkyliques d'acides carboxyliques aliphatiques en C₁-C₂₀.

4. Procédé selon l'une quelconque des revendications précédentes, dans lequel le composé ID est monofonctionnel.

5. Procédé selon l'une quelconque des revendications précédentes, dans lequel le composé ID est choisi dans le groupe constitué par le tétrahydrofuranne, le formiate de méthyle et l'acétate d'éthyle, le formiate d'éthyle, l'acétate de méthyle, l'acétate de propyle, l'acétate d'i-propyle, l'acétate de n-butyle, l'acétate d'i-butyle, le méthyltriméthoxysilane, le diméthyldiméthoxysilane, le triméthylméthoxysilane.

6. Procédé selon l'une quelconque des revendications précédentes, dans lequel deux ID ou plus sont utilisés.

7. Procédé selon la revendication 6, dans lequel un ID est choisi parmi les éthers aliphatiques, en particulier le tétrahydrofuranne, et un autre est choisi parmi les esters d'acides aliphatiques, en particulier l'acétate d'éthyle.

8. Procédé selon l'une quelconque des revendications précédentes, dans lequel le composé de Mg est un produit d'addition de Lewis parmi les produits d'addition de formule MgCl₂ (ROH)ₘ, dans laquelle les groupes R sont des groupes hydrocarbonés en C₁-C₂₀ et m vaut 0,1 à 6.

9. Procédé selon l'une quelconque des revendications précédentes, dans lequel l'intermédiaire solide est prépolymérisé avant d'être soumis à l'étape (b).

10. Procédé selon l'une quelconque des revendications précédentes, dans lequel, à l'étape (b), la quantité de composé ID fixée sur le constituant catalytique est telle que le rapport molaire ID/Ti se situe dans la plage de 1,0:1 à 15:1 et plus préférablement de 1,5:1 à 13:1.

11. Procédé selon l'une quelconque des revendications précédentes, dans lequel le flux gazeux comprend un gaz inerte transportant le composé ID sous forme gazeuse ou liquide.

12. Procédé selon la revendication 11, dans lequel le composé ID dans le flux de gaz inerte est sous forme gazeuse.

13. Procédé selon l'une quelconque des revendications 11 à 12, dans lequel le gaz inerte est l'azote.

14. Procédé selon l'une quelconque des revendications précédentes, dans lequel l'étape (b) est réalisée dans un réacteur à phase gazeuse où le gaz de fluidisation est le même que celui du flux de gaz inerte transportant l'ID.

15. Procédé selon l'une quelconque des revendications précédentes, dans lequel la température de contact dans l'étape (b) est située dans la plage de 10 à 120 °C.
